Europäisches Patentamt

European Patent Office

Office européen des brevets

(11) Veröffentlichungsnummer: **0 497 293 A1**

# EUROPÄISCHE PATENTANMELDUNG

(21) Anmeldenummer: 92101396.7

(22) Anmeldetag: 29.01.92

(51) Int. Cl.5: **B60K 41/14**, F16H 61/46, F04B 49/06

(30) Priorität: 30.01.91 DE 4102621

(43) Veröffentlichungstag der Anmeldung:
05.08.92 Patentblatt 92/32

(84) Benannte Vertragsstaaten:
BE DE ES FR GB IT SE

(71) Anmelder: O&K ORENSTEIN & KOPPEL AG
Staakener Strasse 53-63
W-1000 Berlin 20(DE)

(72) Erfinder: Tolksdorf, Detlef
Herstelerstrasse 11
W-4300 Essen 1(DE)

(54) Verfahren zur Grenzlastregelung eines hydrostatischen Antriebes sowie hydrostatischer Antrieb für Arbeitsmaschinen.

(57) Vorgeschlagen wird ein Verfahren zur Grenzlast-regelung eines hydrostatischen Antriebes sowie ein hydrostatischer Antrieb für Arbeitsmaschinen, insbesondere Baumaschinen. Der hydrostatische Antrieb enthält eine von einer Brennkraftmaschine (1) angetriebene Hydropumpe (2) mit verstellbarem Fördervolumen, eine Grenzlast-Regeleinrichtung (7) sowie eine Ventileinrichtung (11) zur Verstellung des Schwenkwinkels der Hydropumpe. Die Ventileinrichtung besteht aus einem elektronisch ansteuerbaren Druckproportionalventil, welches die Einstellung der Nenngröße der Hydropumpe bewußt störgrößenabhängig veränderlich läßt und die Einstellung nur in Abhängigkeit von den Ansteuersignalen der elektronischen Regeleinrichtung verändert.

EP 0 497 293 A1

Die Erfindung betrifft ein Verfahren zur Grenzlastregelung eines hydrostatischen Antriebes für Arbeitsmaschinen, der eine Brennkraftmaschine, mindestens eine Hydropumpe mit verstellbarem Fördervolumen sowie mindestens eine Ventileinrichtung beinhaltet, wobei

a) die über eine Meßeinrichtung gemessene jeweilige Gaspedalstellung einer elektronischen Grenzlast-Regeleinrichtung zugeführt wird, die die Ventileinrichtung ansteuert und eine Verstellung der Pumpe bewirkt,

b) die Ist-Drehzahl der Brennkraftmaschine über eine weitere Meßeinrichtung erfaßt und als indirekte Leistungsmessung der Regeleinrichtung zugeführt wird,

c) der jeweilige Ist-Wert der Leistung durch Vergleich mit dem Soll-Wert der Leistung als Regelabweichung von der Regeleinrichtung ermittelt wird,

d) die Regeleinrichtung die Ventileinrichtung dergestalt ansteuert, daß die Hydropumpe so verstellt wird, daß deren hydraulische Leistung kleiner oder gleich der verfügbaren Leistung der Brennkraftmaschine wird.

Der EP-A 122 770 ist eine Kontrolleinrichtung für Verstellpumpen und -motoren zu entnehmen. Vorgesehen ist die elektronische Ansteuerung von Hydraulikmotoren/-pumpen über Proportional-Wege-Ventile, um den Schwenkwinkel der Hydraulikmotoren/-pumpen im geschlossenen Regelkreis einzustellen und mit Blick auf das gesamte hydrostatische Getriebe die Ausgangsdrehzahl und das Ausgangsdrehmoment bzw. die Ausgangsleistung zu regeln.

Durch die DE-C 25 31 492 ist bereits eine verstellbare hydrostatische Pumpe bekannt, die von einer Brennkraftmaschine angetrieben wird, wobei eine Regeleinrichtung vorgesehen ist, die ein Abwürgen der Brennkraftmaschine durch übermäßige Belastung von der Pumpe her dadurch verhindert, daß das die Kraftstoffzufuhr bestimmende Glied mit einem elektrischen Schaltglied zusammenwirkt, welches ein Wege-Ventil steuert, das mindestens ein druckbeaufschlagtes Stellmittel zum Verstellen des Stellgliedes der Radialkolbenpumpe beinhaltet. Durch eine derartige Anordnung ist es möglich, die Brennkraftmaschine einer verstellbaren Pumpe vor Überlastung zu schützen und die Antriebsleistung der Maschine stets voll zu nutzen.

Schließlich ist durch die DE-C 36 11 553 eine Anordnung zum Betrieb eines diesel-hydraulischen Antriebes auf einer Baumaschine in Grenzlastregelung mit einem Mikroprozessor-Regler bekannt, bei der die installierte Hydraulikleistung größer ist, als die Dieselmotoren-Nennleistung. Bei thermischer und/oder Dieselmotor-Überlastung ist die abnehmbare hydraulische Leistung reduzierbar. Bei Nichtleistungsbeanspruchung nach einer wählbar vorgegebenen Zeit, ist der Dieselmotor auf Leerlaufdrehzahl schaltbar und die Hydraulikverstellpumpen sind mit minimaler Fördermenge betreibbar. Die regelbaren Hydraulikverstellpumpen sind nach wählbar vorgebbaren Leistungskurven verstellbar.

Hydrostatische Antriebe der vorgenannten Art werden z.B. als Fahrantrieb von Ladern oder Baggern angewendet, wobei die Brennkraftmaschine meistens ein Dieselmotor ist. Hierbei wird eine die Hydropumpe beeinflussende Leistungsbegrenzungsregelung angewendet, um eine Überlastung des Motors zu verhindern. Für den Fahrantrieb der Arbeitsmaschine ergibt sich die zu regelnde Leistung aus dem Produkt von Zugkraft am Fahrzeuggrad und Fahrzeuggeschwindigkeit. Durch bekannte Wandlung der physikalischen Größen, der Fahrzeugachsen und des Getriebes läßt sich die Leistung der Hydropumpe auch ausdrücken als das Produkt aus dem von der Hydropumpe geförderten Volumenstrom und dem Betriebsdruck, der sich entsprechend der Zugkraft am Fahrzeuggrad in dem Hydrokreis zwischen der Hydropumpe und dem Hydromotor einstellt. Der Volumenstrom an der Hydropumpe, von dem die Geschwindigkeit am Fahrzeuggrad abhängt, ergibt sich aus dem Produkt von Drehzahl des Verbrennungsmotors bzw. der Hydropumpe und einer Nenngröße der Hydropumpe, so daß sich die Leistung an der Hydropumpe also ermitteln läßt als das Produkt aus Nenngröße, Drehzahl und Betriebsdruck. Die Leistung eines Dieselmotors ist entsprechend seiner Drehmoment-Drehzahl-Kennlinie genau dann maximal, wenn der Dieselmotor bei konstanter Gaspedalstellung nicht über den P-Grad hinausgedrückt wird, so daß in der vorerwähnten Beziehung für die Leistung der Hydropumpe die Drehzahl als konstant anzusehen ist. Daraus folgt, daß in der vorerwähnten Beziehung für die Leistung der Hydropumpe die Nenngröße der Hydropumpe die einzige abhängige Variable ist. Diese Nenngröße ist abhängig von dem hydraulischen Steuerdruck, mit dem die Nenngröße der Hydropumpe verändert wird, sowie von dem Betriebsdruck bzw. der Betriebsdruckdifferenz um die Hydropumpe herum, wobei eine Vergrößerung des Steuerdruckes das Fördervolumen vergrößert und ein Anstieg der Betriebsdruckes entgegengesetzt wirkt und eine Verkleinerung des Fördervolumens der Hydropumpe bewirkt. Hierbei ergibt sich, daß in der vorerwähnten aus der Nenngröße der Hydropumpe, der Drehzahl und dem Betriebsdruck bestehenden Beziehung für die Leistung der Hydropumpe, der Steuerdruck die einzige den Pumpenvolumenstrom beeinflussende Variable ist, welche sich in geeigneter Form über Ventile einstellen läßt.

Die für hydrostatische Antrieb von Arbeitsmaschinen häufig angewendete Hydropumpenart ist die Axialkolben-Schrägscheiben-Bauart, bei der mit dem hydraulischen Steuerdruck auf einen Stellzylinder in der Hydropumpe eingewirkt wird, der einen zur Veränderung des Pumpenvolumenstromes verstellbaren Schwenkwinkel einer Schrägscheibe in der Axialkolbenpumpe vergrößert oder verkleinert. Bei hydrostatischen Antrieben mit solchen Hydropumpen benutzen alle herkömmlichen Leistungsbegrenzungsregelungen ein Verstellsystem, bei dem die Ansteuerung des Schwenkwinkels in der Hydropumpe über ein hydraulisches wege-proportionales Ventil erfolgt, wobei das Ventil und der Pumpenschwenkwinkel mit einer sogenannten Lageregelung kombiniert sind. Diese Lageregelung stellt selbsttätig an dem Wege-Proportional-Ventil den Steuerdruck nach, um bei auftretenden Störgrößen, die eine Veränderung des Pumpenschwenkwinkels verursachen würden, den von dem elektronischen Regler bestimmten Pumpenschwenkwinkel konstant zu halten.

Mit dieser Lageregelung ziehen die herkömmlichen Systeme zur Leistungsbegrenzungsregelung Instabilitäten nach sich, die sich vor allem bei der Verwendung eines Dieselmotors für den Antrieb der Hydropumpe besonders nachteilig bemerkbar machen. Wenn z.B. durch eine stärkere Belastung des Fahrantriebes der Arbeitsmaschine der Betriebsdruck im hydrostatischen Antrieb ansteigt, verkleinert sich zunächst der Pumpenschwenkwinkel, was eine Reduzierung des Pumpenvolumenstromes und damit der Fahrzeuggeschwindigkeit bedeutet und der Vermeidung einer Überlastung des Antriebsmotors entgegenkommt; die Lageregelung regelt den Pumpenschwenkwinkel jedoch wieder auf und vergrößert somit den Pumpenvolumenstrom bzw. die Fahrzeuggeschwindigkeit, weshalb der Antriebsmotor stark überlastet wird, bis der übergeordnete elektronische Grenzlastregler den Pumpenschwenkwinkel entsprechend reduziert. Der Lageregelkreis des Pumpenschwenkwinkels wirkt also der Leistungsbegrenzungsregelung durch den elektronischen Regler entgegen und führt als Folge davon zu Instabilitäten, da der Dieselmotor als Glied des gesamten Regelkreises ein schlechtes Zeitverhalten hat bzw. eine große Zeitkonstante besitzt und in seinem Drehzahlverhalten der Regelung des Pumpenschwenkwinkels nacheilt, so daß sich die Kombination von Lageregelkreis des Pumpenschwenkwinkels und Verbrennungsmotor, insbesondere Dieselmotor, bei Leistungsbegrenzungsregelungen in starkem Maße negativ und nachteilig auswirkt.

Ziel des Erfindungsgegenstandes ist es, ein Verfahren zur Grenzlastregelung eines hydrostatischen Antriebes sowie einen hydrostatischen Antrieb für Arbeitsmaschinen zu konzipieren, das bzw. der die vorstehend geschilderten nachteiligen Instabilitätserscheinungen der herkömmlichen Leistungsbegrenzungsregelungen nicht mehr beinhaltet.

Dieses Ziel wird verfahrensgemäß dadurch erreicht, daß

e) an der Ventileinrichtung durch die Regeleinrichtung ein Steuerdruck eingestellt wird, der zu jedem Zeitpunkt direkt-proportional zum elektrischen Ansteuerstrom auf die Ventileinrichtung ist,

f) die Hydropumpe aufgrund des anstehenden Steuerdruckes auf einen zugehörigen Schwenkwinkel geführt wird, wobei

g) aufgrund der als Störgröße wirkenden Änderung des Betriebsdruckes an der Hydropumpe deren Schwenkwinkel dergestalt verändert wird, daß bei Erhöhung des Betriebsdruckes der Schwenkwinkel kleiner und bei Verringerung des Betriebsdruckes der Schwenkwinkel größer wird,

h) die Regeleinrichtung den elektrischen Ansteuerstrom auf die Ventileinrichtung in Abhängigkeit der sich aufgrund der Schwenkwinkeländerung der Hydropumpe auf die Brennkraftmaschine auswirkenden Leistungsänderung variiert.

Die Regeleinrichtung ändert den elektrischen Ansteuerstrom auf die Ventileinrichtung vorzugsweise dergestalt, daß der sich dadurch einstellende Steuerdruck an der Ventileinrichtung die Hydropumpe so verstellt, daß die hydraulische Leistung der verfügbaren Leistung der Brennkraftmaschine angepaßt wird.

Ein hydrostatischer Antrieb für Arbeitsmaschinen mit einer Brennkraftmaschine, mindestens einer dadurch angetriebenen Hydropumpe mit verstellbarem Fördervolumen, einer elektronischen Grenzlast-Regeleinrichtung sowie einer Ventileinrichtung zur Verstellung der Hydropumpe ist dadurch gekennzeichnet, daß die Ventileinrichtung durch mindestens ein elektronisches Druckproportionalventil gebildet ist.

Das Druckproportionalventil verändert die Einstellung der das Pumpenfördervolumen beeinflussenden Nenngröße der Hydropumpe bei bewußt störgrößenabhängiger Veränderbarkeit der Einstellung nur in Abhängigkeit von Ansteuersignalen der Regeleinrichtung.

Das Druckproportionalventil kann einerseits ein Druckbegrenzungs-Proportionalventil und andererseits ein Druckregel-Proportionalventil sein.

Schließlich wird die Verwendung eines Druckproportionalventiles für hydrostatische Antriebe von Baumaschinen, insbesondere mobilen Baumaschinen, wie Baggern, Ladern, Gradern oder dgl., vorgeschlagen, das zwischen einer elektronischen Grenzlast-Regeleinrichtung und der bzw. den von einer Brennkraftmaschine, insbesondere einem Dieselmotor, angetriebenen Hydromotoren mit verstellbarem Fördervolumen vorgesehen ist.

Die Erfindung verzichtet also bewußt auf den von den herkömmlichen Systemen zur Leistungsbegrenzungsregelung bei Axialkolbenpumpen mit verschwenkbarer Schrägscheibe angewendeten Lageregelkreis des Pumpenschwenkwinkels und ersetzt das bisher gebräuchliche Stellglied bzw. Wegeventil zur Veränderung des Steuerdruckes durch ein elektronisch ansteuerbares Druckproportionalventil, welches den Steuerdruck zur Verstellung der Nenngröße der Hydropumpe, d.h. des Schwenkwinkels der Schrägscheibe bei einer Axialkolbenpumpe lediglich in Abhängigkeit von bestimmten Anteuersignalen der elektronsichen Regeleinrichtung einstellt und diese Steuerdruckeinstellung bewußt nicht verändert, wenn sich die den Volumenstrom der Hydropumpe verstellende Nenngröße der Hydropumpe aufgrund von Störgrößen, wie etwa aufgrund einer lastabhängigen Änderung des Betriebsdruckes im hydrostatischen Antrieb verändert.

Die Erfindung nimmt bewußt in Kauf, daß sich bei der gewollten Konstanthaltung der Steuerdruckeinstellung der Pumpenvolumenstrom und damit auch die Leistung des anzutreibenden hydraulischen Motors bei einer Zunahme der Belastung des hydrostatischen Antriebes verringern. Dadurch tritt aber der überwiegende große Vorteil ein, daß das lastabhängige Verhalten der Pumpennenngröße bei einer Schrägscheiben-Axialkolbenpumpe, also das Schwenkverhalten der Hydropumpe, ausgenutzt wird, um die Qualität der gesamten Regelstrecke der Leistungsbegrenzungsregelung optimal zu gestalten. Die Leistungsbegrenzungsregelung beim erfindungsgemäßen hydrostatischen Antrieb vermeidet die insbesondere bei dieselmotorischem Antrieb der Hydropumpe auftretenden nachteiligen Instabilitäten der herkömmlichen Systeme und ist dabei außerdem auch noch im apparativen Aufwand einfacher und preiswerter als die herkömmlichen Systeme.

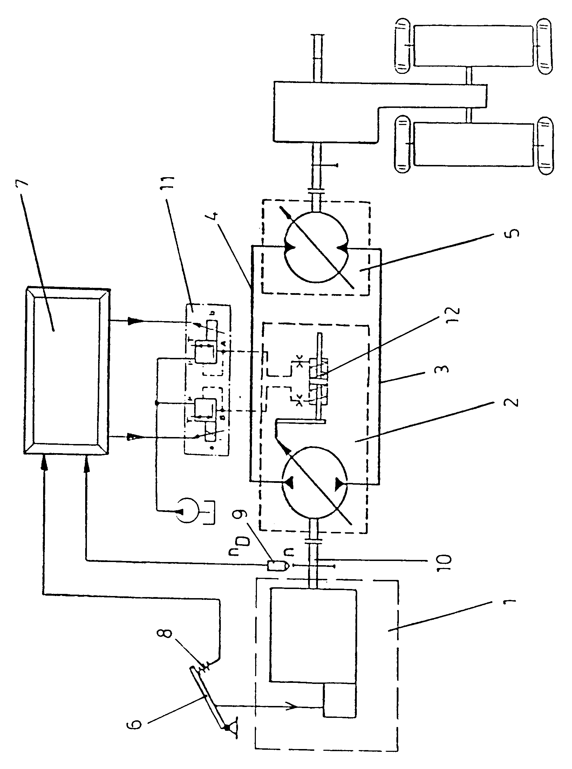

Die Erfindung ist anhand eines Ausführungsbeispieles in der Zeichnung dargestellt und wird wie folgt beschrieben.

In der einzigen Figur ist der erfindungsgemäße hydrostatische Antrieb in einem Schaltbild dargestellt. Eine Brennkraftmaschine 1 in Form eines Dieselmotors treibt eine Hydropumpe 2 mit verstellbarem Fördervolumen an, die beim dargestellten Ausführungsbeispiel eine gebräuchliche Axialkolbenpumpe in Schrägscheibenbauart ist. Die Hydropumpe 2 treibt über einen angeschlossenen hydraulischen Kreislauf 3,4 einen Hydromotor 5 an. Die Drehzahl des Hydromotors 5 und die Stellung des Gaspedals 6 werden von einer elektronischen Grenzlast-Regeleinrichtung 7 bekannter Art verarbeitet, die diese beiden Größen in ein entsprechendes Ansteuersignal umsetzt. Im Bereich des Gaspedals 6 ist ein lediglich angedeuteter Poti 8 als Meßeinrichtung vorgesehen, während eine weitere Meßeinrichtung 9 durch einen Drehzahlgeber im Bereich der Abtriebswelle 10 des Dieselmotors 1 ist.

Die elektronische Regeleinrichtung 7 steuert eine Ventileinrichtung 11 an, die aus einem elektronischen Druckregel-Proportionalventil besteht. Am Druckregel-Proportionalventil 11 wird durch die Regeleinrichtung 7 ein Steuerdruck eingestellt, der zu jedem Zeitpunkt direkt-proportional zum elektrischen Ansteuerstrom auf die Ventileinrichtung 11 ist, wobei die Hydropumpe 2 aufgrund des anstehenden Steuerdruckes auf einen zugehörigen Schwenkwinkel mittels eines Verstellzylinders 12 geführt wird. Aufgrund der als Störgröße wirkenden Änderung des Betriebsdruckes an der Hydropumpe 2, wird deren Schwenkwinkel dergestalt verändert, daß bei Erhöhung des Betriebsdruckes der Schwenkwinkel kleiner und bei Verringerung des Betriebsdruckes der Schwenkwinkel größer wird. Die Regeleinrichtung 7 ändert den elektrischen Ansteuerstrom auf die Ventileinrichtung 11 in Abhängigkeit der sich aufgrund der Schwenkwinkeländerung der Hydropumpe 2 auf den Dieselmotor 1 auswirkenden Leistungsänderung. Die hydraulische Leistung der Hydropumpe 2 wird dadurch der verfügbaren Leistung des Dieselmotors 1 angepaßt, daß die Regeleinrichtung 7 den elektrischen Ansteuerstrom auf die Ventileinrichtung 11 dergestalt ändert, daß der sich dadurch einstellende Steuerdruck an der Ventileinrichtung 11 die Hydropumpe 2 verstellt. Das Druckregel-Proportionalventil 11 nimmt demzufolge die Einstellung des Schwenkwinkels in Abhängigkeit von den Ansteuersignalen der Regeleinrichtung 7 vor, wobei der Steuerdruck konstant gehalten wird und demzufolge keine Nachregelung der Lage des Pumpenschwenkwinkels vorgenommen wird, wenn sich der Schwenkwinkel aufgrund des Eigenverhaltens der Hydropumpe 2 bei sich einstellenden Störgrößen, wie z.B. bei lastbedingter Zunahme des Betriebsdruckes im geschlossen Hydrokreislauf, verkleinert. Erst wenn die elektronische Regeleinrichtung 7 ein Überschreiten der Grenzlast des Dieselmotors 1 ermittelt, wird über das Druckregel-Proportionalventil 11 von den Ansteuersignalen der Regeleinrichtung 7 verstellt, um den Steuerdruck zu senken und durch eine davon abhängige Verkleinerung des Pumpenschwenkwinkels die Leistungsabgabe und Leistungsaufnahme der Hydropumpe 2 auf einen der Grenzlast des Dieselmotors 1 entsprechendes Maß einzustellen.

**Patentansprüche**

1. Verfahren zur Grenzlastregelung eines hydrostatischen Antriebes für Arbeitsmaschinen, der eine Brennkraftmaschine (1), mindestens eine Hydropumpe (2) mit verstellbarem Fördervolumen sowie mindestens eine Ventileinrichtung (11) beinhaltet, wobei

a) die über eine Meßeinrichtung (8) gemessene jeweilige Gaspedalstellung (6) einer elektronischen Grenzlast-Regeleinrichtung (7) zugeführt wird, die die Ventileinrichtung (11) ansteuert und eine Verstellung der Pumpe (2) bewirkt,

b) die Ist-Drehzahl der Brennkraftmaschine (1) über eine weitere Meßeinrichtung (9) erfaßt und als indirekte Leistungsmessung der Regeleinrichtung (7) zugeführt wird

c) der jeweilige Ist-Wert der Leistung durch Vergleich mit dem Soll-Wert der Leistung als Regelabweichung von der Regeleinrichtung (7) ermittelt wird

d) die Regeleinrichtung (7) die Ventileinrichtung (11) dergestalt ansteuert, daß die Hydropumpe (2) so verstellt wird, daß deren hydraulische Leistung kleiner oder gleich der verfügbaren Leistung der Brennkraftmaschine (1) wird

dadurch gekennzeichnet, daß

e) an der Ventileinrichtung (11) durch die Regeleinrichtung (7) ein Steuerdruck eingestellt wird, der zu jedem Zeitpunkt direkt-proportional zum elektrischen Ansteuerstrom auf die Ventileinrichtung (11) ist

f) die Hydropumpe (2) aufgrund des anstehenden Steuerdruckes auf einen zugehörigen Schwenkwinkel geführt wird, wobei

g) aufgrund der als Störgröße wirkenden Änderung des Betriebsdruckes an der Hydropumpe (2) deren Schwenkwinkel dergestalt verändert wird, daß bei Erhöhung des Betriebsdruckes der Schwenkwinkel kleiner und bei Verringerung des Betriebsdruckes der Schwenkwinkel größer wird

h) die Regeleinrichtung (7) den elektrischen Ansteuerstrom auf die Ventileinrichtung (11) in Abhängigkeit der sich aufgrund der Schwenkwinkeländerung der Hydropumpe (2) auf die Brennkraftmaschine (1) auswirkenden Leistungsänderung variiert.

2. Verfahren nach Anspruch 1, dadurch gekennzeichnet, daß die Regeleinrichtung den elektrischen Ansteuerstrom auf die Ventileinrichtung (11) dergestalt ändert, daß der sich dadurch einstellende Steuerdruck an der Ventileinrichtung (11) die Hydropumpe (2) so verstellt, daß die hydraulische Leistung der verfügbaren Leistung der Brennkraftmaschine (1) angepaßt wird.

3. Hydrostatischer Antrieb für Arbeitsmaschinen mit einer Brennkraftmaschine (1), mindestens einer dadurch angetriebenen Hydropumpe (2) mit verstellbarem Fördervolumen, einer elektronischen Grenzlast-Regeleinrichtung (7) sowie einer Ventileinrichtung (11) zur Verstellung der Hydropumpe (2), dadurch gekennzeichnet, daß die Ventileinrichtung (11) durch mindestens ein elektronisches Druckproportionalventil gebildet ist.

4. Hydrostatischer Antrieb nach Anspruch 3, dadurch gekennzeichnet, daß das Druckproportionalventil (11) die Einstellung der das Pumpenfördervolumen beeinflussenden Nenngröße der Hydropumpe (2) bei bewußt störgrößenabhängiger Veränderlichkeit der Einstellung nur in Abhängigkeit von Ansteuersignalen der Regeleinrichtung (7) verändert.

5. Hydrostatischer Antrieb nach den Ansprüchen 3 und 4, dadurch gekennzeichnet, daß das Druckproportionalventil (11) ein Druckbegrenzungs-Proportionalventil ist.

6. Hydrostatischer Antrieb nach den Ansprüchen 3 und 4, dadurch gekennzeichnet, daß das Druckproportionalventil (11) ein Druckregel-Proportionalventil ist.

7. Verwendung eines Druckproportionalventils (11) für hydrostatische Antriebe von Baumaschinen, insbesondere mobilen Baumaschinen, das zwischen einer elektronischen Grenzlast-Regeleinrichtung (7) und der bzw. den von einer Brennkraftmaschine (1), insbesondere einem Dieselmotor, angetriebenen Hydromotoren (2) mit verstellbarem Fördervolumen vorgesehen ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 325 679 (HYDROMATICK) | 7 | B60K41/14 |
| Y | * Spalte 5, Zeile 26 - Spalte 9, Zeile 29; | 1-3 | F16H61/46 |
|   | Abbildungen 1,2 * |   | F04B49/06 |
| A |   | 4,5 |   |
|   | --- |   |   |
| Y | DE-A-3 739 387 (MANNESMANN REXROTH) | 1-3 |   |
|   | * Spalte 2, Zeile 51 - Spalte 4, Zeile 6; |   |   |
|   | Abbildung 1 * |   |   |
|   | --- |   |   |
| A | EP-A-0 352 110 (HONDA GIKEN) | 1,2,4 |   |
|   | * Seite 2, Zeile 32 - Zeile 50 * |   |   |
|   | * Seite 3, Zeile 11 - Seite 5, Zeile 26; |   |   |
|   | Abbildungen 1,2 * |   |   |
|   | --- |   |   |
| A | FR-A-2 441 107 (FENWICK-MANUTENTION) | 1,2,5 |   |
|   | * Seite 3, Zeile 1 - Zeile 36; Abbildung 1 * |   |   |
|   | --- |   |   |
| A | ÖLHYDRAULIK & PNEUMATIK | 1,2,5,7 |   |
|   | Nr. 10, Oktober 1988, MAINZ |   |   |
|   | Seiten 692 - 694; |   |   |
|   | PROF. DR. -ING. W. BACKE: 'neue möglichkeiten |   | **RECHERCHIERTE SACHGEBIETE (Int. Cl.5)** |
|   | der verdrängerregelung' |   |   |
|   | * Seite 692, letzter Absatz - Seite 694, Absatz |   |   |
|   | 1; Abbildung 17 * |   | B60K |
|   |   |   | F16H |
|   | ----- |   | F04B |

Der vorliegende Recherchenbericht wurde für alle Patentansprüche erstellt

| Recherchenort | Abschlußdatum der Recherche | Prüfer |
|---|---|---|
| DEN HAAG | 13 APRIL 1992 | BERTRAND G. |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
  Dokument

EPO FORM 1503 03.82 (P0403)